# EUROPEAN PATENT SPECIFICATION

(11) **EP 3 188 544 B1**
(45) Date of publication and mention of the grant of the patent: **03.04.2019**
(21) Application number: 14881607.7
(22) Date of filing: 15.12.2014
(51) Int. Cl.: H04W 36/00

(54) **METHOD, SYSTEM, AND DEVICE FOR MAINTAINING EMBMS SERVICE CONTINUITY**
VERFAHREN, SYSTEM UND VORRICHTUNG ZUR ERHALTUNG DER EMBMS-DIENSTKONTINUITÄT
PROCÉDÉ, SYSTÈME ET DISPOSITIF DE MAINTIEN DE CONTINUITÉ DE SERVICE EMBMS

(30) Priority: 28.08.2014 CN 201410432771
(43) Date of publication of application: 05.07.2017
(73) Proprietor: ZTE Corporation, Shenzhen, Guangdong 518057 (CN)
(72) Inventor: DU, Gaopeng, Shenzhen Guangdong 518057 (CN); CUI, Yehua, Shenzhen Guangdong 518057 (CN); CHANG, Huawei, Shenzhen Guangdong 518057 (CN); SANG, Jian, Shenzhen Guangdong 518057 (CN)
(74) Representative: Lavoix
(86) International application number: PCT/CN2014/093856
(87) International publication number: WO 2015/117504

(56) References cited:
- CN-A- 101 772 222
- CN-A- 102 752 719
- CN-A- 102 781 057
- CN-A- 103 096 260
- US-A1- 2014 010 142
- KYOCERA: "MBMS service continuity for mobility to CSG cells", 3GPP DRAFT; R2-122788_MBMS_CONN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 15 May 2012 (2012-05-15), XP050607383, [retrieved on 2012-05-15]
- ERICSSON ET AL: "Clarification on frequency information in MBMSInterestIndication message", 3GPP DRAFT; R2-115300 CLARIFICATION ON FREQUENCY INFORMATION IN MBMSINTERESTINDICATION MESSAGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 3 October 2011 (2011-10-03), XP050540841, [retrieved on 2011-10-03]
- NGUYEN NGOC-DUY ET AL: "Service continuity for eMBMS in LTE/LTE-Advanced network: Standard analysis and supplement", 2014 IEEE 11TH CONSUMER COMMUNICATIONS AND NETWORKING CONFERENCE (CCNC), IEEE, 10 January 2014 (2014-01-10), pages 219-224, XP032626126, DOI: 10.1109/CCNC.2014.6866574 [retrieved on 2014-07-25]
- CATT: "Clarification on MBMS service continuity", 3GPP DRAFT; R2-111843, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20110411, 3 April 2011 (2011-04-03), XP050494225, [retrieved on 2011-04-03]
- "3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.2.0, 4 July 2014 (2014-07-04), pages 1-365, XP050774628, [retrieved on 2014-07-04]
- 1ma232_1e Rohde ET AL: "LTE-Advanced (3GPP Rel.11) Technology Introduction White Paper Table of Contents", , 1 July 2013 (2013-07-01), XP055376437, Retrieved from the Internet: URL:https://cdn.rohde-schwarz.com/pws/dl_d ownloads/dl_application/application_notes/ 1ma232/1MA232_1e_LTE_Rel11_technology.pdf [retrieved on 2017-05-29]

## Description

### TECHNICAL FIELD

The disclosure relates to handover in the field of communications, and in particular to a method, system, device and computer readable medium for maintaining Enhanced Multimedia Broadcast Multicast Service (eMBMS) service continuity.

### BACKGROUND

With the rapid development of Internet and the popularity of large-screen multifunctional mobile phones, there are a lot of mobile data multimedia services and various high-bandwidth multimedia services, such as video conferences, television broadcasting, video on demand, education on the Internet, and interactive games. These mobile data multimedia services not only meet the growing service demands of mobile users, but also bring a new service growing point for mobile operators. Besides, these mobile data multimedia services require that multiple users can receive the same data simultaneously, and are characterized by large amount of data, long lasting time, and delay sensitivity compared with the common data services.

In order to utilize mobile network resources efficiently, the 3rd Generation Partnership Project (3GPP) puts forwards eMBMS, which is a technology that shares network resources to transmit data from a data source to multiple targets. When the eMBMS technology is adopted, the utilization of network resources will depend on the number of content channels, rather than the number of users. When there are a large number of users, a core network and a wireless access network can save amounts of resources, and further reduce the network cost efficiently.

In a Long Term Evolution (LTE) system, a multicast mode is used for an eMBMS service, which is called Multimedia Broadcast Multicast Service Single Frequency Network (MBSFN) transmission mode, and thus the service adopting the MBSFN transmission mode is called MBSFN service. The MBSFN service can adopt the same modulated coding format and the same physical resource to transmit the same content in multiple cells. The characteristics of the eMBMS multi-cell transmission include: (1) synchronous transmission is performed in the MBSFN region; (2) combination of eMBMS transmission in multiple cells is supported; (3) a Multicast Traffic Channel (MTCH) and a Multicast Control Channel (MCCH) are mapped to a Multicast Channel (MCH) transmission channel in a Point-To-Multipoint (P-T-M) mode; (4) all of MBSFN synchronous regions, MBSFN regions, MBSFN transmission, advertisements, reservation cells and others are configured semi-statically by operation and maintenance. In such a manner, User Equipment (UE) in multiple cells can receive multiple pieces of eMBMS data with the same content and perform Single Frequency Network (SFN) combination so as to increase the gain of received signal. Multiple cells which adopt the same physical resources and adopt the MBSFN transmission mode to transmit the same eMBMS services form an MBSFN region.

In the actual network deployment for eMBMS, there are multiple MBSFN regions with different frequencies in the same eMBMS service area, and these MBSFN regions provide the same eMBMS service.

During the handover of cells by UE, a target cell is decided by the network side. For UE with eMBMS service capability, according to the existing switching method, when the UE in a Radio Resource Control (RRC) connection state is receiving or is interested in the eMBMS service A in an Evolved NodeB (eNB) cell of the MBSFN region, the UE informs, through an RRC message MBMSInterestIndication, the eNB of a frequency set and a multicast priority identifier of the eMBMS service that it is receiving or is interested in. If the UE moves to the edge of the cell in the MBSFN region, when the UE is reported to the eNB because of meeting measurement conditions of a certain frequency, the eNB performs handover determination according to a measurement result, and determines that the UE may be switched to a frequency cell of a non-MBSFN region, rather than a cell in the frequency set of eMBMS which is reported by the UE. In this case, if the UE has, in a source cell, the eMBMS service which is performed in MBSFN mode, after handover, the UE cannot receive the eMBMS service of interest or the eMBMS being performed is interrupted because the cell of non-MBSFN region does not provide the eMBMS service.

In addition, the frequency set of the eMBMS service in the MBMSInterestIndication reported by a terminal does not differentiate the different types of eMBMS services at present, which causes that the eNB cannot perform corresponding processing with respect to the different types of services during the handover determination. For example, at present, the UE cannot differentiate the frequency sets of the eMBMS services that the user is interested in or is performing, which causes that the eNB cannot perform corresponding processing on the frequency set that the user is receiving or is interested in during the handover determination. If the terminal is receiving the eMBMS service, the eNB may enable the UE to switch to a cell in the frequency set of the eMBMS service of interest, which causes that the service being performed by the terminal is interrupted, thereby influencing the user experience.

The document "MBMS servrce continuity lor mobility to CSG cells", R2-122788, discloses a specific case for service continuity with mobility to CSG cells.

The document US201401042A1 discloses a method of mobility management in a cellular system, which includes determining from a first received indication that at least one communication device intends to receive a multimedia broadcast multicast service or is receiving a multimedia broadcast multicast service.

The document "Clarification on frequency information in MBMslnterestlndication message", R2-115300, discloses the benefits of indicating more than one MBMS frequency to the network and also presents a simple UE based prioritization mechanism.

The article "Service Continuity for eMBMS in LTE/LTE-Advanced Network: Standard Analysis and Supplement" published on 2014-01-10 at the 11th Annual IEEE Consumer Communications and Networking Conference, CCNC, discloses a method to ensure the service continuity as well as to reduce the service interruption time during handover period for eMBMS users in the mobility context.

The document "Clarification on MBMS service continuity", R2111843, discloses the sccnarios of the MBMS service continuity and possible solution directions for the MBMS service continuity.

The document "3GPP TS 36.331, V12.2.0" discloses measurement report triggering.

### SUMMARY

The disclosure provides a method, system, device and computer readable medium for maintaining eMBMS service continuity, which can ensure the eMBMS service continuity of a terminal and improve the user experience.

The technical solutions of the disclosure are implemented as follows.

A method in a source base station for maintaining eMBMS service continuity is provided according to claim 1.

A source base station is also provided according to claim 4.

A system for maintaining eMBMS service continuity is also provided according to claim 5.

A computer readable medium is also provided according to claim 6.

Preferred embodiments of the invention are the subject matter of the dependent claims, whose content is to be understood as forming an integral part of the present description.

In the technical solutions provided by the disclosure, the terminal reports the eMBMS service frequency set identifier to the source base station, the source base station issues to the terminal the event measurement configuration of the frequency set corresponding to the eMBMS service frequency set identifier, and then the terminal performs measurement in the range of frequencies and reports the measurement report to the source base station. In such a manner, it can be ensured that the source base station performs handover in the cell with the same frequency set corresponding to the current eMBMS service of the terminal, it is avoided that the terminal is switched to a cell with a frequency of non-MBSFN region, and it is also avoided that the terminal is switched from a cell of the frequency set where the eMBMS service is being performed to the cell of the frequency set of other services, thereby ensuring the eMBMS service continuity of the terminal and improving the user experience.

### BRIEF DESCRIPTION OF THE DRAWINGS

Fig. 1 is a schematic diagram illustrating an application scenario where a terminal is switched to a unicast cell.
Fig. 2 is a flowchart showing a method for maintaining eMBMS service continuity provided by the embodiments of the disclosure.
Fig. 3 is a flowchart showing a method for maintaining eMBMS service continuity provided by Embodiment 1 of the disclosure.
Fig. 4 is a flowchart showing a method for maintaining eMBMS service continuity provided by Embodiment 2 of the disclosure.
Fig. 5 is a flowchart showing a method for maintaining eMBMS service continuity provided by Embodiment 3 of the disclosure.
Fig. 6 is a structure diagram illustrating a terminal provided by an embodiment of the disclosure.
Fig. 7 is a structure diagram illustrating a base station provided by an embodiment of the disclosure.
Fig. 8 is a flowchart showing a method for maintaining eMBMS service continuity in a compatibility mode provided by an embodiment of the disclosure.
Fig. 9 is a structure diagram illustrating a system for maintaining eMBMS service continuity provided by an embodiment of the disclosure.

### DETAILED DESCRIPTION

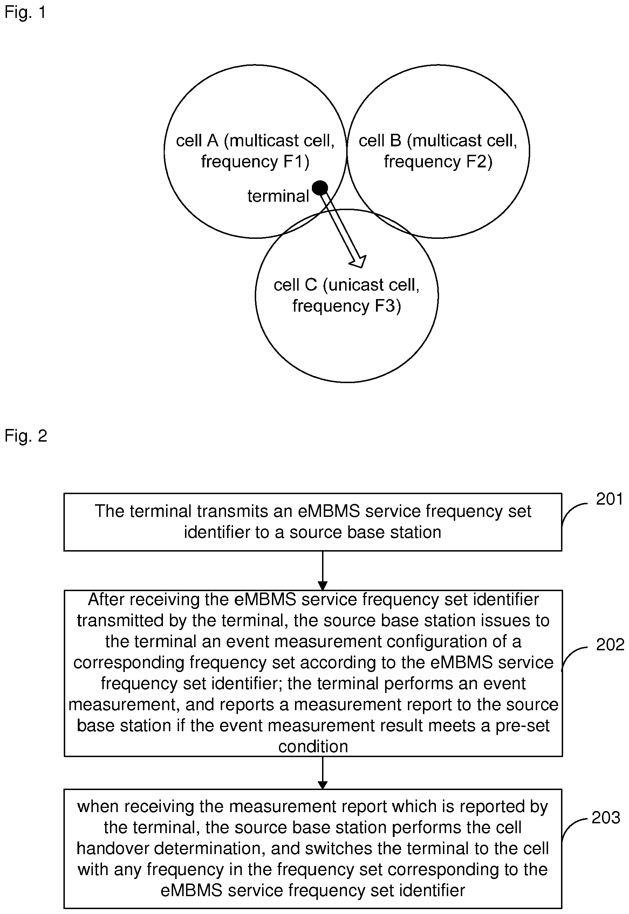

In order to specify the problems to be solved, a description is given in combination with Fig. 1. As shown in Fig. 1, a terminal as shown in the black filled circle receives the eMBMS service in a cell A and belongs to an MBSFN region A, and the provided frequency is F1. A cell B provides the eMBMS service and belongs to an MBSFN region B, and the provided frequency is F2. A cell C is a unicast cell, and the provided frequency is F3. When moving to the edge of the cell A, closing to the cell B and the cell C, the terminal reports a measurement report to an eNB, and then the eNB switches the terminal to the cell C according to the measurement report. However, in order to keep the continuity of the eMBMS service, it is expected to switch the terminal to the cell B.

In order to solve the above problem, the embodiments of the disclosure put forward that: the MBMSInterestIndication reported by the terminal contains the frequency set of the eMBMS service being received, and/or the frequency set of the eMBMS service of interest. Preferably, it can also contain a multicast and unicast priority identifier. If the multicast and unicast priority identifier is carried, then the service of unicast frequency and the service of multicast frequency cannot be compatible and the terminal expects to preferentially receive the service of multicast frequency. If the multicast and unicast priority identifier is not carried, the service of unicast frequency is received first. For the convenience of description, the frequency set of the eMBMS service being received is identified by f1, and the frequency set of the eMBMS service of interest is identified by f2.

The technical solutions in the embodiments of the disclosure are described completely and clearly below in combination with the accompanying drawings.

In consideration of the eMBMS service transmitted in MBSFN mode, the embodiment of the disclosure provides a method for maintaining eMBMS service continuity to ensure the continuity of the eMBMS service. As shown in Fig. 2, the method includes the following steps.

At Step 201, a terminal transmits an eMBMS service frequency set identifier to a source base station.

Herein, the eMBMS service frequency set identifier is used for differentiating the frequency sets of different types of eMBMS services contained in the MBMSInterestIndication reported by the terminal. The frequency sets include: the frequency set of the eMBMS service being received, and/or the frequency set of the eMBMS service of interest. The specific form of the eMBMS service frequency set identifier can be any symbol with differentiating function, which is not limited herein.

The terminal can directly obtain the type of service from an application layer list. In the embodiments of the disclosure, different types of eMBMS services correspond to different eMBMS service frequency set identifiers. Herein, the types of eMBMS services may include the eMBMS service that the terminal is receiving, and/or the eMBMS service that the user is interested in. The different types of eMBMS services correspond to different frequency sets.

For example, if the MBMSInterestIndication reported by the terminal contains the frequency set corresponding to the eMBMS service that the terminal is receiving, the corresponding eMBMS service frequency set identifier can be represented by f1. Alternatively, if the MBMSInterestIndication reported by the terminal contains the frequency set corresponding to the eMBMS service that the user is interested in, the corresponding eMBMS service frequency set identifier can be represented by f2. Both the eMBMS service frequency set identifier f1 and the eMBMS service frequency set identifier f2 are also included at the same time.

Preferably, when the service of unicast frequency and the service of multicast frequency cannot be compatible with each other, the MBMSInterestIndication sent by the terminal may also contain the multicast and unicast priority identifier. When the MBMSInterestIndication sent by the terminal contains the multicast and unicast priority identifier, the terminal first receives the service of multicast frequency; or else, the terminal first receives the service of unicast frequency.

At Step 202, after receiving the eMBMS service frequency set identifier transmitted by the terminal, the source base station issues to the terminal an event measurement configuration of the corresponding frequency set according to the eMBMS service frequency set identifier; the terminal performs an event measurement on a frequency set corresponding to the eMBMS service frequency set identifier, which is transmitted by the source base station, and reports a measurement report to the source base station if the event measurement result meets a pre-set condition.

Herein, the measurement report is used for completing the determination that the source base station is ensured to perform handover in a cell with the same frequency set corresponding to the current eMBMS service of the terminal.

For example, after receiving a message containing the MBMSInterestIndication transmitted by the terminal, the source base station transmits to the terminal the event measurement configuration of the corresponding frequency set according to the eMBMS service frequency set identifier in the MBMSInterestIndication. The pre-set condition is a condition set in advance for allowing to report the measurement report, which relates to the conventional art, and will not be repeated herein.

To make cell handover determination of the base station more accurate, this step may also include that:
when receiving the eMBMS service frequency set identifier transmitted by the terminal, the source base station issues to the terminal a first event measurement configuration of the corresponding frequency set according to the eMBMS service frequency set identifier; the terminal performs the first event measurement sent by the source base station, and reports a first measurement report to the source base station when a first event measurement result meets the pre-set condition. Herein, the first event measurement that the terminal performs is for the source base station to determine whether to switch the current cell, and the cell handover is required to ensure that the source base station performs handover in the cell with the same frequency set corresponding to the current eMBMS service of the terminal.

When receiving the first measurement report which is reported by the terminal, the source base station issues to the terminal a second event measurement configuration of the corresponding frequency set according to the eMBMS service frequency set identifier; the terminal performs the second event measurement sent by the source base station, and reports a second measurement report to the source base station when a second event measurement result meets the pre-set condition. Herein, the second event measurement that the terminal performs is for the source base station to determine whether to complete the current cell handover. The pre-set condition is a condition set in advance for allowing to report the measurement report, which belongs to the conventional art, and will not be repeated here.

Apparently, in this step, the terminal and the source base station may also perform measurements and reports for three or more times according to the above manner to complete the cell handover and ensure the eMBMS service continuity, so as to reduce error handover and ensure accuracy of handover.

At Step 203, when receiving the measurement report which is reported by the terminal, the source base station performs the cell handover determination, and switches the terminal to the cell with any frequency in the frequency set corresponding to the eMBMS service frequency set identifier.

Herein, when the message containing the MBMSInterestIndication transmitted by the terminal contains both the eMBMS service frequency set identifier f1 and the eMBMS service frequency set identifier f2, the source base station first switches the terminal to the cell with any frequency in the frequency set corresponding to the eMBMS service frequency set identifier f1.

In the embodiment of the disclosure, the terminal in an RRC connection state reports, through the MBMSInterestIndication in an RRC message, the eMBMS service frequency set identifier to the source base station, and the source base station issues to the terminal the event measurement configuration of the frequency set corresponding to the eMBMS service frequency set identifier, so that the terminal performs the event measurement in the range of frequencies and reports the measurement report to the source base station. In such a manner, it can be ensured that the source base station performs handover in the cell with the same frequency set corresponding to the current eMBMS service of the terminal, thereby ensuring the eMBMS service continuity of the terminal and improving the user experience.

As for the MBMSInterestIndication reported by the terminal containing different eMBMS service frequency set identifiers, the disclosure can be implemented by the following embodiments.

### Embodiment 1

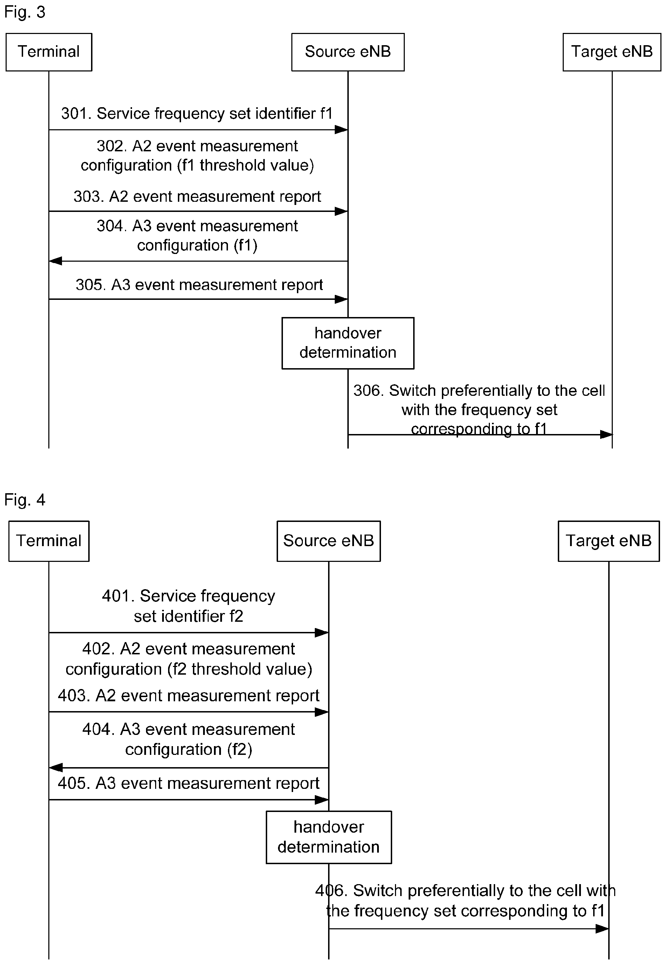

In the present embodiment, the MBMSInterestIndication reported by the terminal contains only the eMBMS service frequency set identifier f1. As shown in Fig. 3, a method for maintaining eMBMS service continuity according to the present embodiment includes the following steps.

At Step 301, the terminal transmits the eMBMS service frequency set identifier f1 to the source base station (the source eNB).

In the present embodiment, the MBMSInterestIndication reported by the terminal contains only the eMBMS service frequency set identifier f1, namely the frequency set of the eMBMS service that the terminal is receiving.

In practice, the MBMSInterestIndication may also contain the multicast and unicast priority identifier.

At Step 302, the source base station issues the measurement configuration of an A2 event corresponding to the eMBMS service frequency set identifier f1.

Herein, the threshold value of the A2 event is configured by a gateway, and the threshold value of the A2 event is greater than the frequency threshold value of the unicast service.

At Step 303, after measuring that the measurement configuration of the A2 event meets the pre-set condition, the terminal reports the A2 event measurement report to the source base station.

At Step 304, after receiving the A2 event measurement report which is reported by the terminal, the source base station issues to the terminal the measurement configuration of the A3 event corresponding to the eMBMS service frequency set identifier f1.

Herein, the threshold value of the A3 event is greater than the frequency threshold value of the unicast service, so as to ensure that the terminal gives priority to the A3 event corresponding to the eMBMS service frequency set identifier f1 during measurement.

At Step 305, after measuring that the measurement configuration of the A3 event meets the pre-set condition, the terminal reports the A3 event measurement report to the source base station.

At Step 306, when receiving the A3 event measurement report which is reported by the terminal, the source base station performs the cell handover determination, and preferably switches the terminal to the cell with the frequency in the frequency set corresponding to the eMBMS service frequency set identifier f1.

Herein, in Step 301, if the MBMSInterestIndication sent by the terminal does not contain the multicast and unicast priority identifier, then the terminal first receives the service of unicast frequency. Correspondingly, the threshold value of the A2 event is the frequency threshold value of the unicast service in Step 302, and the threshold value of the A3 event is the frequency threshold value of the unicast service in Step 304, so as to give priority to the A3 event corresponding to the eMBMS service frequency set identifier f1 during measurement.

### Embodiment 2

In the present embodiment, a method for maintaining eMBMS service continuity is presented. As shown in Fig. 4, the difference between the present embodiment and the embodiment 1 is that: the MBMSInterestIndication sent by the terminal contains only the eMBMS service frequency set identifier f2, that is, the MBMSInterestIndication contains only the frequency set of the eMBMS service that the user is interested in.

In the present embodiment, the eMBMS service frequency set identifier f1 in Steps 301-306 of the embodiment 1 is replaced with the eMBMS service frequency set identifier f2 in Steps 401-406. The other specific processing steps and operations are almost the same, and thus will not be repeated herein.

### Embodiment 3

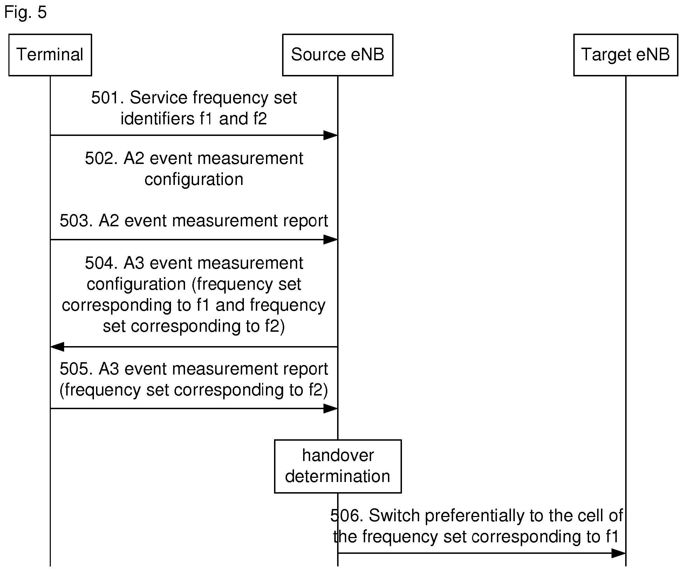

In the present embodiment, a method for maintaining eMBMS service continuity is presented. As shown in Fig. 5, the difference between the present embodiment and the embodiment 1 is that: the MBMSInterestIndication sent by the terminal contains the eMBMS service frequency set identifier f1 and the eMBMS service frequency set identifier f2, that is, the MBMSInterestIndication contains both the frequency set of the eMBMS service that the terminal is receiving and the frequency set of the eMBMS service that the user is interested in.

In the present embodiment, the eMBMS service frequency set identifier f1 in Steps 301-306 of the embodiment 1 is replaced with the eMBMS service frequency set identifier f1 and the eMBMS service frequency set identifier f2 in Steps 501-506. The other specific processing steps and operations are almost the same, and thus will not be repeated herein.

It is noted that, in the present embodiment, the threshold value to which the frequency set corresponding to the eMBMS service frequency set identifier f1 corresponds is greater than the threshold value to which the frequency set corresponding to the eMBMS service frequency set identifier f2 corresponds. Thus, it can be ensured that in Step 505, the terminal first measures the A3 event corresponding to the eMBMS service frequency set identifier f1 which meets the pre-set measurement condition.

If the A3 event corresponding to the eMBMS service frequency set identifier f1 meets the pre-set measurement condition, then the terminal reports to the source base station the measurement report of the A3 event corresponding to the eMBMS service frequency set identifier f1, and the source base station first switches to the cell with any frequency in the frequency set corresponding to the eMBMS service frequency set identifier f1.

If the terminal cannot measure the A3 event corresponding to the eMBMS service frequency set identifier f1 all the time, then the terminal measures the A3 event corresponding to the eMBMS service frequency set identifier f2 and reports to the source base station the measurement report of the A3 event corresponding to the eMBMS service frequency set identifier f2, and the source base station first switches to the cell with any frequency in the frequency set corresponding to the eMBMS service frequency set identifier f2.

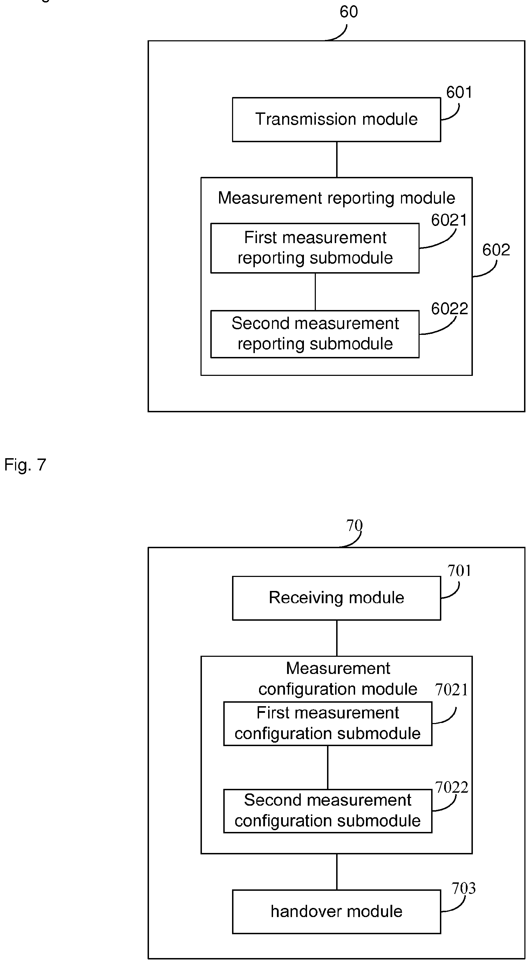

In order to implement the above methods, the embodiments of the disclosure also provide a terminal 60. As shown in Fig. 6, the terminal 60 includes:
a transmission module 601, configured to transmit the eMBMS service frequency set identifier to the source base station, the eMBMS service frequency set identifier being configured to differentiate the frequency sets of different types of eMBMS services; and
a measurement reporting module 602, configured to perform the event measurement on the frequency set which corresponds to the eMBMS service frequency set identifier, and report the measurement report to the source base station if the event measurement result meets the pre-set condition, the measurement report being configured to complete the determination that the source base station is ensured to perform handover in the cell with the same frequency set corresponding to the current eMBMS service of the terminal.

Herein, the measurement reporting module 602 may also include (not shown in the drawings):
a first measurement reporting submodule 6021, configured to perform the first event measurement (namely measure the event of the frequency set corresponding to the eMBMS service frequency set identifier) based on the first event measurement configuration sent by the source base station (based on the eMBMS service frequency set identifier), and report the first measurement report to the source base station if the first event measurement result meets the pre-set condition; and
a second measurement reporting submodule 6022 (coupled with the first measurement reporting submodule 6021), configured to perform the second event measurement (namely measure the event of the frequency set corresponding to the eMBMS service frequency set identifier) based on the second event measurement configuration sent by the source base station (based on the eMBMS service frequency set identifier), and report the second measurement report to the source base station if the second event measurement result meets the pre-set condition.

In practice, the transmission module 601 can be implemented by a transmitter in the terminal 60. The measurement reporting module 602 can be implemented by the transmitter in the terminal in combination with one of the following: a Central Processing Unit (CPU), a Digital Signal Processor (DSP), a Micro Processor Unit (MPU), or a Field Programmable Gate Array (FPGA).

The embodiments of the disclosure also provide a base station 70. As shown in Fig. 7, the base station 70 includes:
a receiving module 701, configured to receive the eMBMS service frequency set identifier which is sent by the terminal, the eMBMS service frequency set identifier being configured to differentiate frequency sets of different types of eMBMS services;
a measurement configuration module 702, configured to issue to the terminal the event measurement configuration of the corresponding frequency set according to the eMBMS service frequency set identifier; and
a handover module 703, configured to perform cell handover determination based on the measurement report which is reported by the terminal, and switch the terminal to the cell with any frequency in the frequency set corresponding to the eMBMS service frequency set identifier.

Preferably, the measurement configuration module 702 includes:
a first measurement configuration submodule 7021, configured to, when the eMBMS service frequency set identifier transmitted by the terminal is received, issue to the terminal the first event measurement configuration of the corresponding frequency set according to the eMBMS service frequency set identifier; and
a second measurement configuration submodule 7022 (coupled with the first measurement configuration submodule 7021), configured to, when the first measurement report which is reported by the terminal is received, issue to the terminal the second event measurement configuration of the corresponding frequency set according to the eMBMS service frequency set identifier.

The receiving module 701 can be implemented by the transmitter in the base station 70. The measurement configuration module 702 can be implemented by the transmitter in the base station 70 in combination with one of the following: a CPU, or a DSP, or an MPU, or an FPGA. The handover module 703 can be implemented by the CPU, or the DPS, or the MPU, or the FPGA in the base station 70.

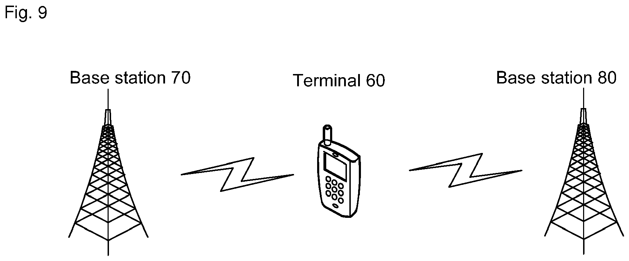

The embodiments of the disclosure also provide a system for maintaining eMBMS service continuity. As shown in Fig. 9, the system includes: the base station 70 (which is the source base station), the terminal 60 and the base station 80 (which is the target base station).

The terminal 60 is configured to transmit the eMBMS service frequency set identifier to the source base station, perform the event measurement on the frequency set corresponding to the eMBMS service frequency set identifier, and report the measurement report to the source base station if the event measurement result meets a pre-set condition, the measurement report being configured for the source base station to performs handover in the cell with the same frequency set corresponding to the current eMBMS service of the terminal.

The base station 70 is configured to receive the eMBMS service frequency set identifier transmitted by the terminal 60, issue to the terminal 60 the event measurement configuration of the corresponding frequency set according to the eMBMS service frequency set identifier, and when the measurement report which is reported by the terminal 60 is received, perform cell handover determination, and switch the terminal 60 to the base station 80 (namely the target base station) of the cell with any frequency in the frequency set corresponding to the eMBMS service frequency set identifier.

Herein, the eMBMS service frequency set identifier is configured to differentiate the frequency sets of different types of eMBMS services.

As an implementation mode, the terminal 60 is further configured to perform the first event measurement based on the first event measurement configuration sent by the source base station, and report the first measurement report to the source base station if the first event measurement result meets the pre-set condition. The first event measurement report is used for the source base station to determine whether to perform the cell handover.

The terminal 60 is further configured to perform the second event measurement based on the second event measurement configuration sent by the source base station, and report the second measurement report to the source base station if the second event measurement result meets the pre-set condition. The second event measurement report is used for the source base station to determine whether to complete the cell handover.

As an implementation mode, the base station 70 is further configured to, when the eMBMS service frequency set identifier transmitted by the terminal 60 is received, issue to the terminal 60 the first event measurement configuration of the corresponding frequency set according to the eMBMS service frequency set identifier; and
when the first measurement report which is reported by the terminal 60 is received, issue to the terminal 60 the second event measurement configuration of the corresponding frequency set according to the eMBMS service frequency set identifier.

For example, the structure and the functions of components of the terminal 60 can refer to the description about the structure and component modules in Fig. 6. The structure and the functions of components of the base station 70 can refer to the description about the structure and component modules in Fig. 7.

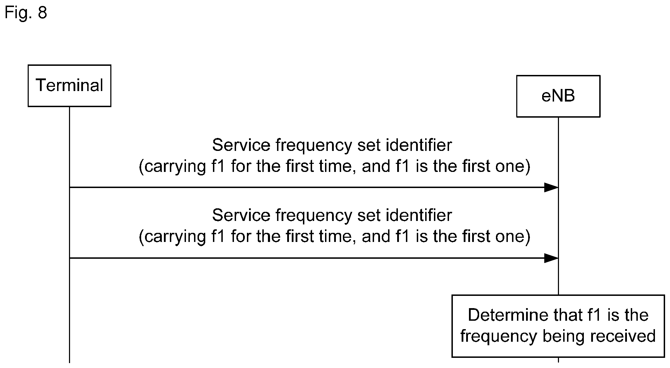

It can be seen from the above description that the embodiments of the disclosure make a certain improvement to the terminal, the base station and the corresponding interaction flow. For example, the terminal shown in Fig. 6 and the base station shown in Fig. 7 interact with each other, thereby implementing the method for maintaining eMBMS service continuity described in the embodiments of the disclosure. However, during the interaction between the terminal and the base station in the conventional art, the message containing the MBMSInterestIndication does not contain the different eMBMS service frequency set identifiers to differentiate the frequency set of the eMBMS service that the terminal is receiving and the frequency set of the eMBMS service that the user is interested in. For maintaining forward compatibility of the terminal, the terminal in an older version in the conventional art can adopt the processing flow shown in Fig. 8, which specifically includes that: the terminal only needs to transmit to the eNB the MBMSInterestIndication containing the frequency set of the eMBMS service for two consecutive times; and if the contents of the frequency sets of the eMBMS service which are contained in the MBMSInterestIndication sent for two times are the same, then the eNB considers that the first frequency in the frequency set is the frequency of the eMBMS service that the terminal is receiving. In such a manner, the ideas of the disclosure can also be realized without a major change to the terminal in the older version.

Those skilled in the art should understand that the embodiments of the disclosure can provide a method, a system or a computer program product. Thus, forms of hardware embodiments, software embodiments or embodiments integrating software and hardware can be adopted in the disclosure. Moreover, a form of the computer program product implemented on one or more computer available storage media (including, but not limited to, a disk memory, an optical memory and the like) containing computer available program codes can be adopted in the disclosure.

The disclosure is described with reference to flowcharts and/or block diagrams of the method, the equipment (system) and the computer program product according to the embodiments of the disclosure. It should be understood that each flow and/or block in the flowcharts and/or the block diagrams and a combination of the flows and/or the blocks in the flowcharts and/or the block diagrams can be realized by computer program instructions. These computer program instructions can be provided for a general computer, a dedicated computer, an embedded processor or processors of other programmable data processing devices to generate a machine, so that an apparatus for realizing functions assigned in one or more flows of the flowcharts and/or one or more blocks of the block diagrams is generated via instructions executed by the computers or the processors of the other programmable data processing devices.

## Claims

1. A method in a source base station for maintaining Enhanced Multimedia Broadcast Multicast Service, eMBMS, service continuity, comprising:
receiving (501), by a source base station, an eMBMS service frequency set identifier transmitted by a terminal, the eMBMS service frequency set identifier being for identifying frequency sets of eMBMS services; **characterized in that** the method further comprises:
issuing (502), by the source base station, to the terminal a first event measurement configuration of a frequency set corresponding to the eMBMS service frequency set identifier; and
when a first event measurement report is received from the terminal (503), issuing, by the source base station, to the terminal a second event measurement configuration of the corresponding frequency set according to the eMBMS service frequency set identifier, wherein the first event measurement report is sent by the terminal if a result of the measurement based on the first event measurement configuration meets a pre-set condition and wherein the first event measurement report being configured to determine whether to perform cell handover; and
when a second event measurement report is received from the terminal (505), performing, by the source base station, cell handover determination based on the second event measurement report, and switching (506) the terminal to a cell which provides an eMBMS service included in the eMBMS service frequency set, wherein the second event measurement report is sent by the terminal if a result of the measurement based on the second event measurement configuration meets a pre-set condition.

2. The method according to claim 1, wherein the eMBMS service frequency set identifier comprises at least one of: a frequency set identifier of an ongoing eMBMS service, or a frequency set identifier of an eMBMS service that a user is interested in.

3. The method according to claim 1, wherein switching (506) the terminal to a cell which provides an eMBMS service included in the eMBMS service frequency set comprises:
when the eMBMS service frequency set identifier comprises: a frequency set identifier of an ongoing eMBMS service and a frequency set identifier of an eMBMS service that a user is interested in, switching, by the source base station, the terminal to a cell which provides the ongoing eMBMS service.

4. A source base station, comprising:
a receiving module (701), configured to receive an Enhanced Multimedia Broadcast Multicast Service, eMBMS, service frequency set identifier transmitted by a terminal, the eMBMS service frequency set identifier being for identifying frequency sets of eMBMS services; **characterized in that** the source base station further comprises:
a measurement configuration module, configured to issue to the terminal a first event measurement configuration of a frequency set corresponding to the eMBMS service frequency set identifier; and
a handover module (703), configured to perform cell handover determination based on a second event measurement report when the second event measurement report is received from the terminal, and switch the terminal to a cell which provides an eMBMS service included in the eMBMS service frequency set, wherein the second event measurement report is sent by the terminal if a result of the measurement based on the second event measurement configuration meets a pre-set condition,
wherein the measurement configuration module comprises:
a second measurement configuration submodule (7022), configured to, when a first event measurement report is received from the terminal, issue to the terminal a second event measurement configuration of the corresponding frequency set according to the eMBMS service frequency set identifier, wherein the first event measurement report is sent by the terminal if a result of the measurement based on the first event measurement configuration meets a pre-set condition and wherein the first event measurement report being configured to determine whether to perform cell handover.

5. A system for maintaining Enhanced Multimedia Broadcast Multicast Service, eMBMS, service continuity, **characterized in that**, the system comprises: a source base station according to claim 4 and a terminal.

6. A computer readable medium having executable instructions stored thereon, wherein the executable instructions, to be executed by a source base station, are configured to perform all the method steps for maintaining Enhanced Multimedia Broadcast Multicast Service, eMBMS, service continuity according to any one of claims 1 to 3.

## Patentansprüche

1. Verfahren einer Quellen-Basisstation zur Aufrechterhaltung der Kontinuität eines eMBMS-Dienstes (Enhanced Multimedia Broadcast Multicast Service), umfassend:
Empfangen (501) einer eMBMS-Dienstfrequenzsatzkennung, die von einem Endgerät gesendet wird, durch eine Quellen-Basisstation, wobei die eMBMS-Dienstfrequenzsatzkennung zur Identifizierung von Frequenzsätzen von eMBMS-Diensten bestimmt ist, **dadurch gekennzeichnet, dass** das Verfahren ferner umfasst:
Erteilen (502) einer ersten Ereignismessungskonfiguration eines der eMBMS-Dienstfrequenzsatzkennung entsprechenden Frequenzsatzes durch die Quellen-Basisstation an das Endgerät, und
wenn ein erster Ereignismessbericht vom Endgerät (503) empfangen wird: Erteilen einer zweiten Ereignismessungskonfiguration des entsprechenden Frequenzsatzes gemäß der eMBMS-Dienstfrequenzsatzkennung durch die Quellen-Basisstation an das Endgerät, wobei der erste Ereignismessbericht vom Endgerät gesendet wird, wenn ein Messergebnis basierend auf der ersten Ereignismessungskonfiguration eine vorgegebene Bedingung erfüllt, und wobei der erste Ereignismessbericht derart konfiguriert ist, dass er bestimmt, ob ein Zellen-Handover durchzuführen ist, und
wenn ein zweiter Ereignismessbericht vom Endgerät (505) empfangen wird: Durchführen einer Zellen-Handover-Bestimmung durch die Quellen-Basisstation basierend auf dem zweiten Ereignismessbericht und Umschalten (506) des Endgeräts auf eine Zelle, die einen im eMBMS-Dienstfrequenzsatz enthaltenen eMBMS-Dienst erbringt, wobei der zweite Ereignismessbericht vom Endgerät gesendet wird, wenn ein Messergebnis basierend auf der zweiten Ereignismessungskonfiguration eine vorgegebene Bedingung erfüllt.

2. Verfahren nach Anspruch 1, wobei die eMBMS-Dienstfrequenzsatzkennung mindestens eines der nachfolgenden Elemente umfasst: eine Frequenzsatzkennung eines andauernden eMBMS-Dienstes oder eine Frequenzsatzkennung eines eMBMS-Dienstes, für den sich ein Benutzer interessiert.

3. Verfahren nach Anspruch 1, wobei das Umschalten (506) des Endgeräts auf eine Zelle, die einen im eMBMS-Dienstfrequenzsatz enthaltenen eMBMS-Dienst erbringt, umfasst:
wenn die eMBMS-Dienstfrequenzsatzkennung umfasst: eine Frequenzsatzkennung eines andauernden eMBMS-Dienstes und eine Frequenzsatzkennung eines eMBMS-Dienstes, für den sich en Benutzer interessiert, Umschalten des Endgeräts auf eine Zelle, die den andauernden eMBMS-Dienst erbringt, durch die Quellen-Basisstation.

4. Quellen-Basisstation, umfassend:
ein Empfangsmodul (701), das zum Empfangen einer eMBMS-Dienstfrequenzsatzkennung, die von einem Endgerät gesendet wird, konfiguriert ist, wobei die eMBMS-Dienstfrequenzsatzkennung zur Identifizierung von Frequenzsätzen von eMBMS-Diensten bestimmt ist, **dadurch gekennzeichnet, dass** die Quellen-Basisstation ferner umfasst:
ein Messungskonfigurationsmodul, das zum Erteilen einer ersten Ereignismessungskonfiguration eines der eMBMS-Dienstfrequenzsatzkennung entsprechenden Frequenzsatzes an das Endgerät konfiguriert ist, und
ein Handover-Modul (703), das zum Durchführen einer Zellen-Handover-Bestimmung basierend auf dem zweiten Ereignismessbericht und Umschalten (506) des Endgeräts auf eine Zelle, die einen im eMBMS-Dienstfrequenzsatz enthaltenen eMBMS-Dienst erbringt, konfiguriert ist, wenn der zweite Ereignismessbericht vom Endgerät (703) empfangen wird, wobei der zweite Ereignismessbericht vom Endgerät gesendet wird, wenn ein Messergebnis basierend auf der zweiten Ereignismessungskonfiguration eine vorgegebene Bedingung erfüllt;
wobei das Messungskonfigurationsmodul umfasst:
ein zweites Messungskonfigurations-Submodul (7022), das zum Erteilen einer zweiten Ereignismessungskonfiguration des entsprechenden Frequenzsatzes gemäß der eMBMS-Dienstfrequenzsatzkennung an das Endgerät konfiguriert ist, wenn ein erster Ereignismessbericht vom Endgerät empfangen wird, wobei der erste Ereignismessbericht vom Endgerät gesendet wird, wenn ein Messergebnis basierend auf der ersten Ereignismessungskonfiguration eine vorgegebene Bedingung erfüllt, und wobei der erste Ereignismessbericht derart konfiguriert ist, dass er bestimmt, ob ein Zellen-Handover durchzuführen ist.

5. System zur Aufrechterhaltung der Kontinuität eines eMBMS-Dienstes, **dadurch gekennzeichnet, dass** das System umfasst: eine Quellen-Basisstation nach Anspruch 4 und ein Endgerät.

6. Computerlesbarer Datenträger, auf dem ausführbare Befehle gespeichert sind, wobei die von einer Quellen-Basisstation auszuführenden ausführbaren Befehle derart konfiguriert sind, dass sie alle Verfahrensschritte zur Aufrechterhaltung der Kontinuität eines eMBMS-Dienstes nach einem der Ansprüche 1 - 3 ausführen.

## Revendications

1. Procédé, mis en oeuvre dans une station de base source, de maintien d'une continuité de service d'un service de radiodiffusion multimédia multidestinataire amélioré, eMBMS, comprenant l'étape ci-dessous consistant à :
recevoir (501), par le biais d'une station de base source, un identificateur d'ensembles de fréquences de services eMBMS transmis par un terminal, l'identificateur d'ensembles de fréquences de services eMBMS étant destiné à identifier des ensembles de fréquences de services eMBMS ; **caractérisé en ce que** le procédé comprend en outre les étapes ci-dessous consistant à :
transmettre (502), par le biais de la station de base source, au terminal, une première configuration de mesure d'événement d'un ensemble de fréquences correspondant à l'identificateur d'ensembles de fréquences de services eMBMS ; et
lorsqu'un premier rapport de mesure d'événement est reçu en provenance du terminal (503), transmettre, par le biais de la station de base source, au terminal, une seconde configuration de mesure d'événement de l'ensemble de fréquences correspondant selon l'identificateur d'ensembles de fréquences de services eMBMS, le premier rapport de mesure d'événement étant envoyé par le terminal si un résultat de la mesure basée sur la première configuration de mesure d'événement satisfait une condition prédéfinie, et le premier rapport de mesure d'événement étant configuré de manière à déterminer s'il convient de mettre en oeuvre un transfert intercellulaire de cellule ; et
lorsqu'un second rapport de mesure d'événement est reçu en provenance du terminal (505), mettre en oeuvre, par le biais de la station de base source, une détermination de transfert intercellulaire de cellule sur la base du second rapport de mesure d'événement, et commuter (506) le terminal vers une cellule qui fournit un service eMBMS inclus dans l'ensemble de fréquences de service eMBMS, le second rapport de mesure d'événement étant envoyé par le terminal si un résultat de la mesure basée sur la seconde configuration de mesure d'événement satisfait une condition prédéfinie.

2. Procédé selon la revendication 1, dans lequel l'identificateur d'ensembles de fréquences de services eMBMS comprend au moins l'un parmi : un identificateur d'ensembles de fréquences d'un service eMBMS en continu, ou un identificateur d'ensembles de fréquences d'un service eMBMS qui intéresse un utilisateur.

3. Procédé selon la revendication 1, dans lequel l'étape de commutation (506) du terminal vers une cellule qui fournit un service eMBMS inclus dans l'ensemble de fréquences de service eMBMS comprend l'étape ci-dessous consistant à :
lorsque l'identificateur d'ensembles de fréquences de services eMBMS comprend : un identificateur d'ensembles de fréquences d'un service eMBMS en continu et un identificateur d'ensembles de fréquences d'un service eMBMS qui intéresse un utilisateur, commuter, par le biais de la station de base source, le terminal vers une cellule qui fournit le service eMBMS en continu.

4. Station de base source, comprenant :
un module de réception (701), configuré de manière à recevoir un identificateur d'ensembles de fréquences de services de service de radiodiffusion multimédia multidestinataire amélioré, eMBMS, transmis par un terminal, l'identificateur d'ensembles de fréquences de services eMBMS étant destiné à identifier des ensembles de fréquences de services eMBMS ; **caractérisée en ce que** la station de base source comprend en outre :
un module de configuration de mesure, configuré de manière à transmettre, au terminal, une première configuration de mesure d'événement d'un ensemble de fréquences correspondant à l'identificateur d'ensembles de fréquences de services eMBMS ; et
un module de transfert intercellulaire (703), configuré de manière à mettre en oeuvre une détermination de transfert intercellulaire de cellule sur la base d'un second rapport de mesure d'événement, lorsque le second rapport de mesure d'événement est reçu en provenance du terminal, et à commuter le terminal vers une cellule qui fournit un service eMBMS inclus dans l'ensemble de fréquences de service eMBMS, le second rapport de mesure d'événement étant envoyé par le terminal si un résultat de la mesure basée sur la seconde configuration de mesure d'événement satisfait une condition prédéfinie ;
le module de configuration de mesure comprenant :
un second sous-module de configuration de mesure (7022), configuré de manière à, lorsqu'un premier rapport de mesure d'événement est reçu en provenance du terminal, transmettre, au terminal, une seconde configuration de mesure d'événement de l'ensemble de fréquences correspondant selon l'identificateur d'ensembles de fréquences de services eMBMS, le premier rapport de mesure d'événement étant envoyé par le terminal si un résultat de la mesure basée sur la première configuration de mesure d'événement satisfait une condition prédéfinie, et le premier rapport de mesure d'événement étant configuré de manière à déterminer s'il convient de mettre en oeuvre un transfert intercellulaire de cellule.

5. Système destiné à maintenir une continuité de service d'un service de radiodiffusion multimédia multidestinataire amélioré, eMBMS, **caractérisé en ce que** le système comprend : une station de base source selon la revendication 4 et un terminal.

6. Support lisible par ordinateur sur lequel sont stockées des instructions exécutables, les instructions exécutables, devant être exécutées par une station de base source, étant configurées de manière à mettre en oeuvre toutes les étapes du procédé pour maintenir une continuité de service d'un service de radiodiffusion multimédia multidestinataire amélioré, eMBMS, selon l'une quelconque des revendications 1 à 3.
